# EUROPEAN PATENT APPLICATION

(11) **EP 2 618 292 A1**
(43) Date of publication of application: **24.07.2013**
(21) Application number: 12151350.1
(22) Date of filing: 17.01.2012
(51) Int. Cl.: G06K 19/077

(54) **Dual interface card with metallic insert connection**

(71) Applicant: ASSA ABLOY AB, 107 23 Stockholm (SE)
(72) Inventor: Ayala, Stéphane, 1610 Oron-la-Ville (CH)
(74) Representative: Grosfillier, Philippe

(57) **Abstract**

The present invention concerns a method for manufacturing a product such as a dual interface card inlay, wherein said method comprises the steps of providing a card inlay (1) with a antenna (3) having contact pads (5); forming a recess (6) in said inlay (1) for receiving a chip module (2) with contacts (4); and applying at least one insert (7) to create an electrical contact between a contact (4) of the module (2) and a contact pad (5) of the antenna (3).

The present invention also concerns a product, such as a dual interface card, produced according to this method.

## Description

### TECHNICAL FIELD

The present invention concerns a method for manufacturing a dual interface card, showing free contact electrodes at the electronic chip module for a contact-type data communication and an embedded antenna for wireless communication.

The present invention also concerns a card obtained by the method steps of the invention.

### BACKGROUND ART

Dual interface cards combine the functionalities of a RFID (Radio Frequency Identification) card with those of a contact card. These dual interface cards can be used to provide identification data to an external card reader, either over a wireless radio signal (RFID) or by direct contact between the card and the reader unit. Because of this double functionality, dual interface RFID cards can be used in a wide variety of applications, such as employee ID badges, electronic passports, healthcare cards, credit/debit cards, GSM- SIM cards, transit/toll payment or other contactless payments.

The standard contact function is normally used when it is necessary to perform single and individual readings, as for example the reading of a credit card in a cash machine (ATM). On the other hand, the RFID function is ideal for applications that require a rapid distance reading of the card data and is widely used to provide secured access to buildings, parkings and to pay highway toll fees etc.

In the RFID card function, the data transfer starts when an external reader unit transmits a wireless radio signal with a defined frequency. The card itself has an embedded antenna, which reacts by resonance to the receiver signal and communicates back to the reader with a modulated radio signal, containing data information from the electronic chip module.

In conventional methods of producing a dual interface card, an antenna is first embedded into a non- conductive sheet. The non-conductive sheet with the antenna is then hot- or cold- laminated to an upper sheet layer.

In the next step of the process, a cavity is milled out of the card body to accommodate an electronic chip module and to expose the antenna terminals. The electronic chip module is thereafter placed in the cavity and connected to the antenna terminals.

The contact pads on the chip module are normally connected to the antenna terminals by using for example an electrically conductive glue. The chip itself is often bonded to the laminate layers in the recess with thermo-glue and by applying heat (approximately 180°C) to activate the thermo-glue and the thermoplastic laminate materials. Finished card inlays are traditionally exposed to an additional curing step in an oven, at approximately 50°C for 48 hours to fully cure the conductive glue and attach the antenna terminals and chip module together.

One of the most critical steps in the manufacturing process is the interconnection of the antenna terminals to the electronic chip module. The antenna and the chip module connection needs to be durable enough to withstand effects of card bending, heat, and other stresses. As the card contains a mix of different plastic materials and metals, it is difficult to create a strong connection between the components. A durable antenna-electronic chip module connection is essential for maintaining the RFID/ "contactless" card function.

As previously described, one of the most common solutions for connecting the antenna terminals with the electronic chip module is to use an adhesive. US 6,467,692 discloses an example where an adhesive with electrical conductive capability is being used.

Other examples are disclosed in the documents US 2009/0151150 and WO 01/16876, where the antenna-chip module connection is established by using a thermoplastic material with integrated metal particles.

Another conventional approach for connecting the antenna terminals to the chip module includes means of thermal compression bonding or soldering. Document WO 2008/141990 shows different solutions to improve the unreliable connection between the antenna terminals and the chip module as well as avoiding chip breakage during the lamination process. The document discloses different embodiments of enlarged antenna contact areas, where the antenna has been flattened or provided with additional contact plates. In a following operation, the antenna-electronic module connection is established by welding, soldering or by means of an adhesive.

US 7,735,741 and WO 2001/16876 show further examples where the antenna ends have larger connecting terminals and where the microcircuit is encapsulated in a thermally activated rigid resin material.

Nevertheless, connections effected by soldering (with metal alloys, usually tin-lead, indium-cadmium-lead or indium-tin in paste form) or by adhesive bonding using conductive adhesives or thermoplastic materials are complicated, cost extensive, result in poor manufacturing yields and have quality issues.

### SUMMARY OF THE INVENTION

It is therefore an aim of the present invention to improve the known manufacturing processes and products.

It is a further objective of the present invention to improve the mechanical and electrical durability of the antenna terminals-chip module connection in a dual interface card.

Another objective is to create an electrical connection between the chip module and antenna terminals which support mechanical stress, such as card bending without disturbing the electrical connection.

Another objective is to mechanically connect the electronic chip module to the different laminated layers in the card body.

A further objective of the present invention is to create an efficient production method where no fine-tuned milling operation is needed to expose the antenna contact ends. Moreover, the heat curing step of the adhesive and thermoplastic material may also be avoided, resulting in fewer operations, shorter overall lead-time and less inventory in the manufacturing pipeline.

Another objective is to have a manufacturing process allowing card quality check before the connection (between module and antenna) is achieved. This authorized to reject default cards (for ex. because of default on the visible printed surface) without losing the dual interface module (which can be extracted from the default cards).

A feature of the present invention is to use metallic inserts to connect the chip module to the antenna terminals.

Contact chip modules comprise at the upper surface metalized pre-defined and standardized contact pad areas (ISO/IEC 7810 and ISO/IEC 7816) for establishing the contact connection with contact pins of a reader head. In the present invention, a module is specially designed in order to present on its upper surface, offside of the standardized contact pads, implantation zones for accommodating the metallic inserts as will be described in more detail hereunder.

Accordingly, in the proposed method according to the invention, an antenna is embedded into a card body with the contact terminals close to the future, i.e. predetermined, position of the chip module. The antenna terminals could have an enlarged geometry and could be embedded in the same layer as the main antenna coil. This can be done using the known manufacturing methods for such cards as disclosed above.

A cavity is then produced by milling and the module is introduced in the cavity, as in the prior art. The cavity of the card may also be pre-defined as in EP2034429, where the applicant suggested an alternative method of assembling layers, some with punched holes, into a sandwich type of structure.

Once the semi-finished card is provided with the embedded antenna and the chip module, the electrical connection between the chip module and the antenna is then created by the use of at least two conductive inserts that connect the module contacts with the antenna contacts.

In the context of the invention, there are various embodiments of the conductive inserts. They can be provided with threads, one or several or flanges and also provided with or without a pin head. Other embodiments comprise hollow structures with adhesive or soldering paste. The conductive inserts may be inserted by means of pressure and/or heat, screwed, nailed, etc...by any equivalent process.

In an embodiment, the invention provides a method for manufacturing a dual interface card, wherein said method comprises the following steps:
-) providing a card body with an embedded antenna having connection pads and a dual interface chip module with contact pads and contactless pads in a recess formed at the surface of the card body;
-) implanting at least one conductive insert through the module to create an electrical connection between a contactless pad of the module and a connection pad of the antenna.

In an embodiment the upper face of the module shows separated from the contact pads implantation zones adapted to accept implantation of the insert.

In an embodiment the contactless pads of the module are formed at the surface of the implantation zones.

In an embodiment the contactless pads of the module are positioned vertically below the surface of the implantation zones.

In an embodiment the structure of the module below said implantation zones is designed in order to facilitate the implantation of the insert through the module without damaging the rest of the structure of the module.

In an embodiment each contactless pad of the module is vertically aligned with one of the connection pads of the antenna.

In an embodiment, once implanted, each insert is traversing portions of the module, of one of the contactless pads, of the card body and/or of one of the connection pad.

In an embodiment the insert is designed in order to be able to perforate the module, the contactless pads, the connection pads and/or the card body material.

In an embodiment, implanting the insert comprises the step of punching, nailing or screwing the insert through the module.

In an embodiment before an insert is implanted, a hole is pre-drilled at least through the module to ease implantation of the insert.

In an embodiment the pre-drilled hole is continued also through portions of the card body and/or of one of the connection pad.

In an embodiment implanting the insert comprises the step of injecting in the hole a conductive material, followed by the step of curing and/or solidifying the conductive material.

In an embodiment the conductive material is a liquefied solder paste, solder metal, a conductive thermoplastic, a conductive thermosetting adhesive, a UV-curable conductive adhesive or similar.

In an embodiment the insert comprises retention means to fix mechanically the insert in place after implantation.

In an embodiment, the invention concerns a dual interface card manufactured by a method according to the steps described in the present application, wherein the card comprises a card body with an embedded antenna having connection pads, a cavity containing a dual interface chip module with contact pads and contactless pads , and wherein the electrical connection between at least one antenna connection pad and at least one module contactless pad is ensured by a conductive insert implanted through the module.

In an embodiment, the card may comprise two antenna connection pads, two contactless pads and two inserts for the respective electrical connections.

### DETAILED DESCRIPTION

The present invention will be better understood from a detailed description of different embodiments and from the drawings which show:
Figure 1 illustrates a top view of a dual interface card according to the present invention;
Figure 2 illustrates a detailed top view of a dual interface module according the present invention
Figure 3 illustrates a cross sectional cut-view of a dual interface module according the present invention.
Figure 4 illustrates a top sectional cut-view of a card showing details of the embedded antenna;
Figure 5 illustrates a cross sectional cut-view of the card before placing the module into the card inlay;
Figure 6 illustrates a cross sectional cut-view of the card after the module has been in the recess;
Figure 7 illustrates a cross sectional cut-view of the chip module in the cavity of the inlay when the inserts are implanted;
Figures 8a, 8b, 8c, 8d, 8e, 8f illustrate different possible embodiments of the inserts of the present invention.

The dual interface card according to the present invention can be manufactured through any lamination method known from the prior art and the documents cited above are incorporated by reference in their entirety in the present application to this effect. In particular, the cavity for receiving the electronic chip module, can be either punched, milled or moulded, for example.

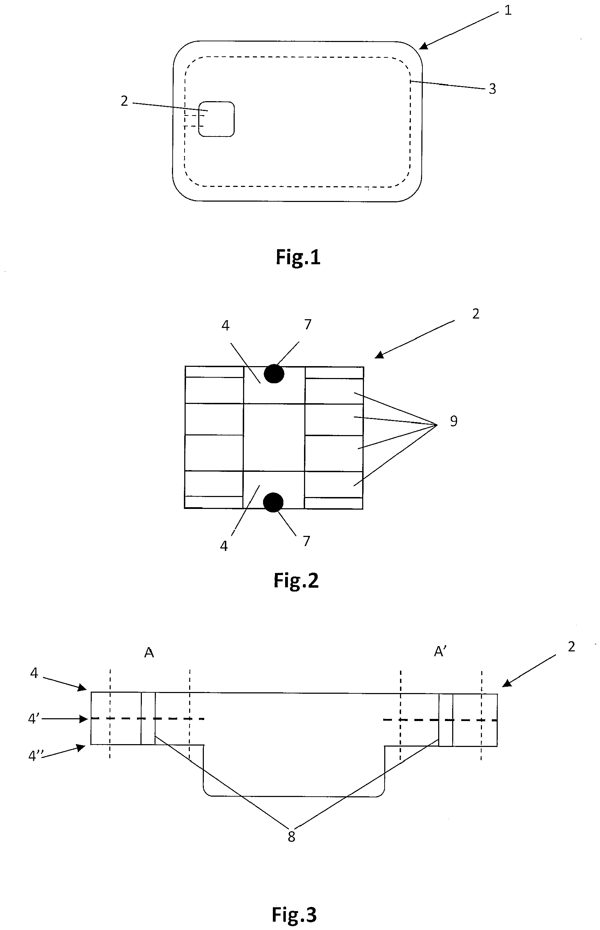

Figure 1 shows a top front view of a dual interface card 1, which comprises a dual interface chip module 2 and an antenna 3 embedded in the body of the card (visible by transparency on Fig. 1), wherein the contact pads of the module and the antenna are all connected to the same integrated circuit (chip) inside of the module.

As shown on Fig. 2, the chip module shows standardized metalized contact pads 9, on its upper side, (ISO/IEC 7810 and ISO/IEC 7816) for establishing the contact connection with contact pins of a reader head (not shown). The module also shows contactless pads 4 for electrical connexion to the antenna 3 in order to communicate with a wireless (RFID) reader. One can also see on this figure the top head of the inserts 7 as implanted through the contactless pads 4 in accordance with the principles of the present invention.

In the preferred embodiment disclosed in Fig. 2, the contactless pads 4 are formed at the upper face of the module in similar way as the contact pads 9, but in zones which are not reserved by the contact pads according to the applicable standards (ISO/IEC 7810 and ISO/IEC 7816). Preferably, the contactless pads 4 are formed simultaneously to the contacts pads 9 out of the same metallization layer (each pad being then separated for ex. by electro-erosion or by another equivalent process).

Alternatively, as shown in Figure 3, the contactless pads 4 can be located below the surface of the module (see 4') or even on the lower surface of the module (4"). The only requirement is that the contactless pads (4, 4' or 4") cover a defined implantation zone (zones A and A' defined by dashed lines in Fig. 3) in which the insert 7 is going to be implanted through the module.

The insert 7 is not only going to be implanted through the contactless pad (4, 4' or 4"), but also through the entire body of the module 2 corresponding to the implantation zone. Therefore, the structure of the module should be designed in order to support without damage the implantation of the insert 7. In a preferred embodiment, the module 2 shows in the implantation zones A and A' pre-formed holes 8 which are facilitating the implantation of the inserts 7 through the module structure. The pre-formed hole could be traversing the entire module thickness (as on Fig. 3) or only be formed (for example by electro-erosion) through the upper metallization layer in which the contact pads are formed (see Fig. 2).

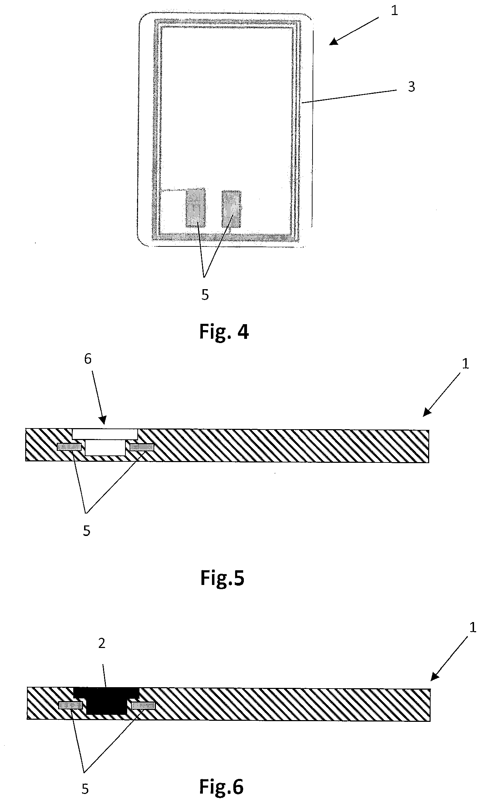

Figure 4 shows a top cut-view of a dual interface card 1 and a preferred embodiment of the antenna connection pads 5. The antenna connection pads 5 are provided with a larger geometrical area to accommodate the conductive inserts 7 (described later in the present specification) with less precision needed. The pads 5 may be inserted or formed when the antenna is deposited on a support layer, which is then laminated with other layers in order to form the finished card body 1, as is known in the art.

In this preferred embodiment, the connection pads 5 are conductive plates connected to the antenna 3 ends. Depending also on the nature of the antenna 3 (conductive wire, printed antenna, deposited foil, ...), the connection pads could be (for example):
- a metallic plate
- wire meanders covering the area of the pads 5
- an area covered by a printed layer of conductive ink
- a conductive grid
- another equivalent construction...

The nature of the connection pad 5 should also be selected in order to optimize the connection with / the fixation to the insert 7.

Referring now to figure 5, a first part of the production process is shown: a card body in which a antenna 3 is embedded is provided and a cavity 6 is formed in the card body 1, by punching, milling, moulding or any other known equivalent method for producing apertures. This step is a standard process step for manufacturing contact cards.

The electronic chip module 2 is then introduced in the cavity 6 as illustrated in Fig. 6. Preferably, the module 2 may fixed to the card body 1 by adhesive and/or thermoplastic material. This is also parrt of the standard process steps to manufacture contact cards. One have only to ensure that the implantation zones A and A' of the implanted module 2 are vertically aligned with the connection pads 5 of the antenna. In contrary to traditional dual interface cards manufacturing process, there is here no need to expose the antenna ends/contacts during the milling phase.

Alternatively, as according the method disclosed in EP2034429, the module 2 could also be positioned in the recess 6 previous to the lamination of the layers forming the card body 1. In this case however, no need to let the connection pads of the antenna freely accessible in the recess and to put a conductive thermosetting adhesive on them prior to the lamination. It is clear that the method claimed here covers also this case wherein the card body 1 is laminated together after that the module 2 is placed in the recess 6.

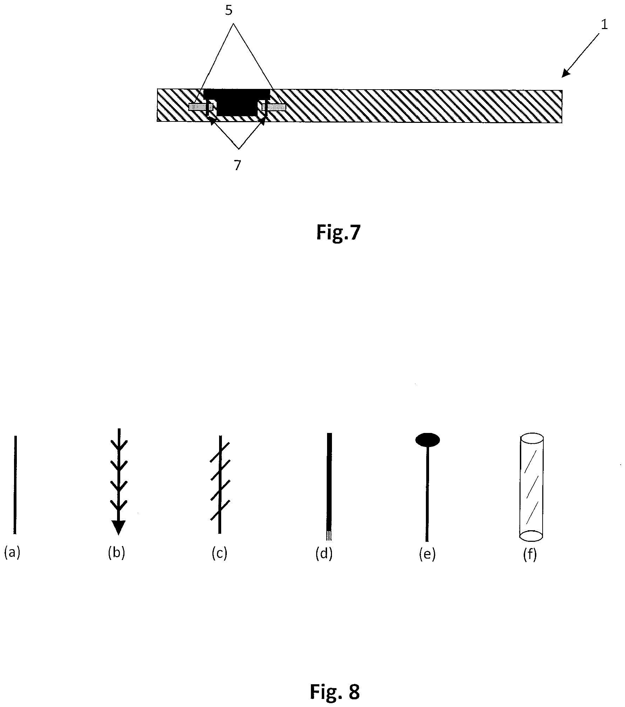

In a subsequent step which is illustrated in figure 7, at least two conductive inserts 7, for example metallic inserts, are punched (nailed) through the module 2 and a portion of the card body 1 and/or force-fitted in holes (if presents) in order to establish the connection between pads 4 and 5. The material and the design of the inserts 7 should be selected in order to be able to achieve the perforation step they are intended to (see figures 8(a) to 8(f) for examples).

In a preferred embodiment (as discussed previously), the inserts 7 are introduced into pre-formed hole through the module 2 in the implantation zones A and A' (see Fig. 3). Optionally, the inserts 7 and the holes could be formed with respective threads in order that the insert 7 may be easily screwed in through the module 2 contacts 4. It is also possible to add a process of "pre-drilling" holes through the chip module once the module is placed in the recess 6.

By extension, the said "pre-drilled" holes could also be formed in respective portions of the card body 1 and/or of the connection pads 5 in order to form a continuous hole in which the insert 7 is going to be implanted.

In such a configuration, the pin of the insert 7 could be advantageously covered by a conductive glue layer previous to be inserted in the continuous hole. The will ensure a good conductive and mechanical connection of all elements.

In order to reinforce the bonding between the metallic material of the inserts 7 and the card body 1, it is also possible to expose the inserts 7 and/or the chip module 2 to an additional heating (for ex. up to around 180°C). This is in particular relevant if some material used has to be thermally cured or if the insert 7 has a coating of solder paste or solder metal. The solder paste is essentially powdered metal solder and can be any comprise tin, copper, lead, zinc or bismuth, as non-limiting examples.

Referring now to figure 8a to 8f, a selection of exemplary embodiments of the metallic insert 7 are disclosed. Of course these are only illustrative and other suitable shapes may be considered.

The inserts 7 can have many different shapes. The most standard shape is the simple pin structure as shown in figure 8a (and 7), but the pins can also be provided with means for retention, such as one or several sets of flanges, as shown in figure 8b, or a screw structure with a thread as shown in figure 8c.

A particular attention should be given to the design of the tip of insert 7 which should able to perforate the encountered materials and structures, as for example with a arrow point as shown on figure 8b.

But the design of the tip could also be used to ensure a proper electrical connection with the connection pad 5 of the antenna, for example by showing multiple contact threads or spikes. The fork tip as shown in figure 8d can be for example advantageously used if the connection pad 5 is constituted by a conductive wire making multiple meanders. If the respective dimensions are chosen carefully, one can ensure that at least one of the segments of the wire (forming the pad 5) will be caught by the fork tip of the insert 7.

Figure 8e shows another embodiment where the other extremity of the insert 7 has been provided with a pin-head for engaging the insert 7 and the module 2 together. It should here be noted that this upper extremity of the insert 7 (with or without pin-head) could be advantageously made of a non conductive material.

Figure 8f illustrates another embodiment where the insert 7 comprises of a flowable conductive material (powder, paste, liquid, ...) which is filled / injected in pre-formed holes (extending from the module surface to the connection pad 5) discussed above . The injectable conductive material can be a liquefied solder paste, a solder metal, conductive thermoplastic material, a conductive thermosetting adhesive, a UV-curable conductive adhesive or similar. The injection step is generally completed by a subsequent curing and/or solidifying step (heating, cooling, UV-radiation, ...) which will ensure the stabilization of the mechanical and electrical connections (between the contact pads 4 and 5) achieved by the injected conductive material.

All the embodiments given in the present application are exemplary embodiments that should not be construed or interpreted in a limiting manner. Other embodiments using equivalent means are possible as well as combinations of embodiments as described herein.

## Claims

1. A method for manufacturing a dual interface card, wherein said method comprises the following steps:
-) providing a card body (1) with an embedded antenna (3) having connection pads (5) and a dual interface chip module (2) with contact pads (9) and contactless pads (4) in a recess (6) formed at the surface of the card body (1);
-) implanting at least one conductive insert (7) through the module to create an electrical connection between a contactless pad (4) of the module (2) and a connection pad (5) of the antenna (3).

2. The method according to claim 1, wherein the upper face of the module (2) shows, separated from the contact pads (9), implantation zones (A,A') adapted to accept implantation of the insert (7).

3. The method according to claim 2, wherein the contactless pads (4) of the module are formed at the surface of the said implantation zones.

4. The method according to claim 2, wherein the contactless pads (4) of the module are positioned vertically below the surface of the said implantation zones.

5. The method according to claim 2, wherein the structure of the module below said implantation zones is designed in order to facilitate the implantation of the insert through the module without damaging the rest of the structure of the module.

6. The method according to one of the preceding claims, wherein each contactless pad (4) of the module (2) is vertically aligned with one of the connection pads (5) of the antenna.

7. The method according to one of the preceding claims, wherein, once implanted, each insert (7) is traversing portions of the module (2), of one of the contactless pads (6), of the card body (1) and/or of one of the connection pad (5).

8. The method according to one of the preceding claims, wherein the insert (7) is designed in order to be able to perforate the module, the contactless pads, the connection pads and/or the card body material.

9. The method according to one of the preceding claims, wherein implanting the insert (7) comprise the step of punching, nailing or screwing the insert through the module (2)

10. The method according to one of the preceding claims, wherein before an insert (7) is implanted, a hole is pre-drilled at least through the module (2) to ease implantation of the insert (7).

11. The method according to claim 10 wherein the said pre-drilled hole is continued also through portions of the card body (1) and/or of one of the connection pad (5).

12. The method according to claim 11, wherein implanting the insert comprises the step of injecting in said hole a conductive material , followed by the step of curing and/or solidifying said conductive material.

13. The method according to claim 12, wherein said conductive material is a liquefied solder paste, solder metal, a conductive thermoplastic, a conductive thermosetting adhesive, a UV-curable conductive adhesive or similar.

14. The method according to one of the preceding claims, wherein the insert (7) comprises retention means to fix mechanically the insert (7) in place after implantation.

15. A dual interface card manufactured by a method according any of the preceding claims, comprising an card body (1) with an embedded antenna (3) having connection pads (5), a cavity (6) containing a dual interface chip module (2) with contact pads (9) and contactless pads (4), and wherein the electrical connection between at least one antenna connection pad (4) and at least one module contactless pad (6) is ensured by a conductive insert (7) implanted through the module.

16. The card according to claim 15, wherein it comprises two antenna connection pads (5), two contactless pads (4) and two inserts (7) for the respective electrical connections.
